# EUROPÄISCHE PATENTSCHRIFT

(11) **EP 0 632 223 B1**
(45) Veröffentlichungstag und Bekanntmachung des Hinweises auf die Patenterteilung: **15.07.1998**
(21) Anmeldenummer: 94107757.0
(22) Anmeldetag: 19.05.1994
(51) Int. Cl.: F16L 9/18, F16L 59/06, F24J 3/08, F28F 1/00, G01M 3/28

(54) **Kunststoffummanteltes Kupferrohr**
Copper pipe having a plastic coating
Tube métallique en cuivre avec un revêtement de matière plastique

(30) Priorität: 01.06.1993 DE 9308202 U
(43) Veröffentlichungstag der Anmeldung: 04.01.1995
(73) Patentinhaber: KM Europa Metal Aktiengesellschaft, D-49023 Osnabrück (DE)
(72) Erfinder: Hackmann, Franz-Josef, D-49477 Ibbenbüren (DE); Heller, Günter, D-49086 Osnabrück (DE); Warhus, Karl-Heinz, D-49134 Wallenhorst (DE)

(56) Entgegenhaltungen:
- BE-A- 562 069
- CH-A- 548 567
- DE-A- 1 675 338
- DE-A- 2 735 957
- FR-A- 1 240 034
- FR-A- 2 295 334

## Beschreibung

Die Erfindung betrifft ein kunststoffummanteltes Kupferrohr zur Verwendung als Sicherheitsrohr für Erdreichkollektoren in Wärmepumpenanlagen, dessen Kunststoffmantel in Längsrichtung des Rohrs verlaufende, nach innen ragende und sich auf der Rohroberfläche abstützende Stege aufweist.

Bei Erdwärme nutzenden direkt wirkenden Wärmepumpen wird üblicherweise als wärmeaufnehmender Kollektor eine Rohrschlange in das Erdreich verlegt. Diese im Wärmepumpenkreislauf als Direktverdampfer arbeitende Rohrschlange wird von den als Wärmeübertragungsmedium dienenden Kältemitteln durchströmt. Damit es im Falle von Undichtigkeiten nicht zu einer Grundwasserverunreinigung kommt, dürfen insbesondere in Wasserschutzgebieten aus wasserrechtlichen Gründen einwandige Rohrschlangen nicht mehr in das Erdreich verlegt werden. Um zu verhindern, daß bei eventuellen Leckagen das Kältemittel aus der Rohrschlange entweicht, sind Rohre in Mantelausführung mit dazwischen liegendem Spalt zur Feststellung einer Undichtigkeit bzw. zur Aufnahme der Leckflüssigkeit vorgeschrieben.

Für den Einsatz in Wärmeaustauschern sind bereits sogenannte Sicherheitsrohre bekannt, die aus einem metallischen Innenrohr und einem um dieses koaxial angeordneten metallischen Außenrohr bestehen. Der gegebenenfalls durch Abstandsrippen unterbrochene ringförmige Spalt zwischen beiden Rohren dient beispielsweise über in der Rohrschlange angeordnete Sensoren zur Feststellung eventueller Leckagen des Innenrohrs bzw. zum Auffangen der ausgetretenen Flüssigkeit. Derartige Rohre werden durch Aufeinanderziehen auf Ziehbänken hergestellt und haben dadurch bedingt nur eine begrenzte Länge. Nachteilig für den Einsatz als Erdreichkollektor ist weiterhin deren schlechte Biegbarkeit wie auch die Notwendigkeit, die metallische Oberfläche des Außenrohrs durch eine Beschichtung gegen Korrosion im Erdreich zu schützen.

Aus der DE 27 35 957 C2 sind weiterhin kunststoffummantelte Kupferrohre bekannt, die als wärmeisolierte Zuleitungen für Heizkörper oder als Rohrschlangen für Fußbodenheizungen verwendet werden. Der auf das metallische Rohr aufextrudierte Stegmantel besteht vorzugsweise aus einem weichen Polyvinylchlorid, welches eine geringe Festigkeit aufweist und sich damit nicht für die Anforderungen eignet, die an ein Sicherheitsrohr für einen Erdreichkollektor gestellt werden.

Aus der FR-A-2 295 334 ist schließlich noch ein aus einem Kupferrohr und einem Kunststoffmantel bestehendes wärmeisolierendes Verbundrohr bekannt, dessen Kunststoffmantel in Längsrichtung des Kupferrohrs verlaufende, nach innen ragende und sich auf der Rohroberfläche abstützende Stege aufweist. Zur Erhöhung der Wärmeisolation des Verbundrohrs besteht der Mantel aus einem geschäumten Kunststoffgemisch relativ niedriger Dichte.

Ausgehend vom Stand der Technik liegt der vorliegenden Erfindung die Aufgabe zugrunde, ein kostengünstiges kunststoffummanteltes Kupferrohr zur Verfügung zu stellen, das einen in Längsrichtung des Rohrs durchgängigen Leckspalt aufweist und im übrigen den Anforderungen an im Erdreich verlegte Kollektoren genügt.

Diese Aufgabe wird durch die Kombination der im Kennzeichen des Anspruchs 1 erfaßten Merkmale gelöst.

Vorteilhafte Weiterbildungen der Erfindung sind in den Unteransprüchen angegeben.

Auf das aus Kupfer bestehende Innenrohr wird ein Mantel aus einem thermoplastischen Kunststoff hoher Dichte extrudiert, der einem Innendruck von etwa 10 bar standhält. Dementsprechend ist bei einer Steghöhe von maximal 4 mm, vorzugsweise 1,5 mm, der Außendurchmesser des Mantels mindestens um den Faktor 1,2 größer als der Außendurchmesser des Innenrohrs. Der Stegabstand des Kunststoffmantels auf der Rohroberfläche wird vorteilhaft im Bereich von 3 bis 10 mm gewählt, damit der Mantel eine möglichst kreisrunde Oberfläche aufweist.

Ein derartig ausgebildetes Sicherheitsrohr läßt sich kostengünstig in relativ großen Längen herstellen und erfüllt die strengen Anforderungen, die beim Transport stark wassergefährdender Flüssigkeiten gestellt werden. Es kann in großen Längen bei guter Biegbarkeit als Rohrschlange verlegt werden. Der mit besonderem Vorteil aus PE-HD bestehende Kunststoffstegmantel hält bei Leckagen des Innenrohrs dem Innendruck ohne weiteres stand und weist darüber hinaus eine hohe Korrosionsbeständigkeit im Erdreich auf. Die sich auf der Rohroberfläche abstützenden Stege des Kunststoffmantels weisen dabei vorzugsweise einen verjüngenden Querschnitt auf.

Im folgenden wird ein bevorzugtes Ausführungsbeispiel des erfindungsgemäßen Sicherheitsrohrs für Erdreichkollektoren anhand einer Figur noch näher erläutert.

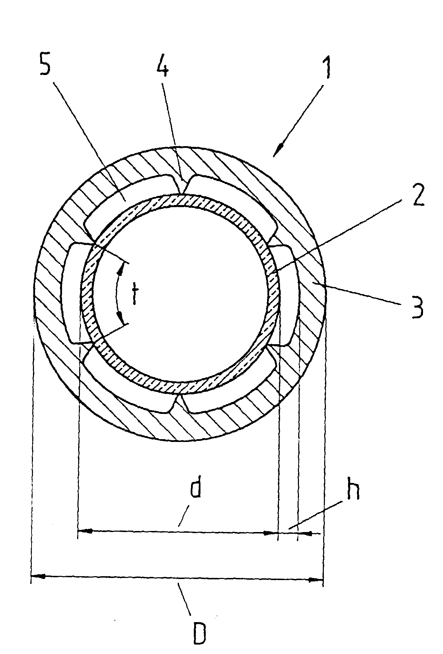

Die Figur zeigt den Querschnitt einer erfindungsgemäßen Ausführungsform.

Das mit 1 bezeichnete Sicherheitsrohr besteht aus einem nahtlos gezogenen metallischen Innenrohr 2 aus SF-Cu mit einem Außendurchmesser von 15 mm und einer Wanddicke von 0,9 mm sowie einem Außenrohr 3, das zweckmäßigerweise durch Extrudieren aufgebracht wird.

Das Außenrohr 3 mit einem Außendurchmesser von 22 mm weist an der Innenseite sechs in Rohrlängsrichtung verlaufende nahezu dreieckförmig ausgebildete Stege 4 auf. Die Steghöhe h des Mantels beträgt etwa 1,5 mm, der Stegabstand t 7,85 mm. Als Werkstoff für das Außenrohr kann vorzugsweise ein Kunststoff mit einer Mindeststreckspannung von 20 N/mm², gemessen bei 23 °C und 50 % Luftfeuchtigkeit verwendet werden. Besonders gut eignen sich Kunststoffe der Gruppe PE-HD, die beispielsweise unter der Bezeichnung Hostalen GM 5010 T2 am Markt erhältlich sind.

Das kunststoffummantelte Kupferrohr wird je nach Außendurchmesser in Ringbunden von 50 m bzw. 75 m Länge gefertigt und kann im Erdreich montagegünstig zu Rohrschlangen ausgelegt werden, die direkt im Innenrohr 2 von dem wärmeaufnehmenden Kältemittel durchflossen werden. Im Fall von Leckagen des Innenrohrs 2 kann das Kältemittel in dem durch die Stege 4 gebildetem Ringraum 5 aufgefangen werden. Über beispielsweise am Rohrschlangenende angeordnete Sensoren wird dann die Undichtigkeit angezeigt, damit Maßnahmen zur Schadensminderung eingeleitet werden können.

In Weiterbildung der Erfindung kann der Ringraum 5 aber auch mit einer umweltunbedenklichen Sole als Wärmeträgermedium gefüllt sein, um den Wärmeübergang zwischen dem Erdreich und dem Kältemittel noch weiter zu verbessern.

## Patentansprüche

1. Kunststoffummanteltes Kupferrohr zur Verwendung als Sicherheitsrohr für Erdreichkollektoren in Wärmepumpenanlagen, dessen Kunststoffmantel (3) in Längsrichtung des Rohrs (2) verlaufende, nach innen ragende und sich auf der Rohroberfläche abstützende Stege (4) aufweist, **gekennzeichnet durch** die Kombination folgender Merkmale:
- der Mantel (3) besteht aus einem thermoplastischen Kunststoff hoher Dichte
- der Abstand (t) der Stege (4) auf der Rohroberfläche liegt in einem Bereich von 3 bis 10 mm
- die maximale Steghöhe (h) beträgt 4 mm
- der Ringraum (5) zwischen Rohr (2) und Mantel (3) ist mit einer umweltfreundlichen Flüssigkeit gefüllt.

2. Kunststoffummanteltes Kupferrohr nach Anspruch 1, **dadurch gekennzeichnet**, daß der Außendurchmesser (D) des Mantels (3) mindestens um den Faktor 1,2 größer ist als der Außendurchmesser (d) des Rohrs (2).

3. Kunststoffummanteltes Kupferrohr nach Anspruch 1 oder 2, **dadurch gekennzeichnet**, daß die Stege (4) einen in Richtung zur Rohroberfläche verjüngenden Querschnitt aufweisen.

4. Kunststoffummanteltes Kupferrohr nach Anspruch 3, **dadurch gekennzeichnet**, daß der Querschnitt der Stege (4) dreieckförmig ausgebildet ist.

5. Kunststoffummanteltes Kupferrohr nach Anspruch 1, **dadurch gekennzeichnet**, daß der Mantel (3) aus Hart-Polyethylen der Gruppe PE-HD besteht.

## Claims

1. Plastic-encased copper pipe for use as a safety pipe for ground collectors in heat pump installations, the plastic casing (3) of which exhibits ribs (4) running in the longitudinal direction of the pipe (2), projecting inwards and bearing on the surface of the pipe,
characterised by the combination of the following features:
- the casing (3) is made of a high-density thermoplastic;
- the spacing (t) of the ribs (4) on the surface of the pipe lies in a range from 3 to 10 mm;
- the maximum rib height (h) is 4 mm;
- the annular space (5) between the pipe (2) and the casing (3) is filled with an environmentally friendly liquid.

2. Plastic-encased copper pipe according to claim 1, characterised in that the outside diameter (D) of the casing (3) is at least 1.2 times greater than the outside diameter (d) of the pipe (2).

3. Plastic-encased copper pipe according to claim 1 or 2, characterised in that the ribs (4) exhibit a cross-section which tapers in the direction of the surface of the pipe.

4. Plastic-encased copper pipe according to claim 3, characterised in that the cross-section of the ribs (4) is triangular.

5. Plastic-encased copper pipe according to claim 1, characterised in that the casing (3) is made of hard polyethylene from the PE-HD group.

## Revendications

1. Tube de cuivre muni d'une gaine de matière plastique pour l'utilisation comme tube de sécurité pour des collecteurs dans la terre dans des installations de thermopompes, dont l'enveloppe en matière plastique (3) comporte des nervures (4) se développant dans le sens longitudinal du tube (2), en saillie vers l'intérieur et s'appuyant sur la surface du tube,
caractérisé en ce que
l'enveloppe (3) se compose d'une matière thermoplastique de densité élevée,
la distance (t) des nervures (4) sur la surface du tube se situe dans l'intervalle de 3 à 10 mm,
la hauteur maximale (h) des nervures se monte à 4 mm,
l'espace intérieur (5) entre tube (2) et enveloppe (3) est rempli par un liquide non polluant.

2. Tube de cuivre muni d'une gaine de matière plastique selon la revendication 1,
caractérisé en ce que
le diamètre extérieur (D) de l'enveloppe (3) est plus grand d'au moins le facteur (1, 2) que le diamètre extérieur (d) du tube (2).

3. Tube de cuivre muni d'une gaine de matière plastique selon les revendications 1 ou 2,
caractérisé en ce que
les nervures (4) ont en direction de la surface du tube une section s'amincissant.

4. Tube de cuivre muni d'une gaine de matière plastique selon la revendication 4,
caractérisé en ce que
la section transversale des nervures (4) est triangulaire.

5. Tube de cuivre muni d'une gaine en matière plastique selon la revendication 1,
caractérisé en ce que
la gaine (3) se compose de polyéthylène dur, du groupe PE-HD.
